# EUROPEAN PATENT SPECIFICATION

(11) **EP 3 415 265 B1**
(45) Date of publication and mention of the grant of the patent: **30.12.2020**
(21) Application number: 17175441.9
(22) Date of filing: 12.06.2017
(51) Int. Cl.: B23K 26/38

(54) **METHOD AND DEVICE FOR HIGH-THROUGHPUT CUTTING OF A RIBBON-TYPE SUBSTRATE, PARTICULARLY FOR AN ELECTRODE OF A BATTERY, INTO SEPARATED PIECES**
VERFAHREN UND VORRICHTUNG ZUM HOCHDURCHSATZSCHNEIDEN EINES BANDARTIGEN SUBSTRATS, INSBESONDERE FÜR EINE ELEKTRODE EINER BATTERIE, IN GETRENNTE TEILE
PROCÉDÉ ET DISPOSITIF DE COUPE À HAUT RENDEMENT D'UN SUBSTRAT DE TYPE RUBAN, EN PARTICULIER POUR UNE ÉLECTRODE D'UNE BATTERIE, EN PIÈCES SÉPARÉES

(43) Date of publication of application: 19.12.2018
(73) Proprietor: Robert Bosch GmbH, 70442 Stuttgart (DE)
(72) Inventor: SCHERNER, Martin, 96132 Schluesselfeld (DE); PROELL, Johannes, 96052 Bamberg (DE); ENGELMAYER, Andreas, 70199 Stuttgart (DE)

(56) References cited:
- DE-A1- 2 458 656
- DE-A1-102007 057 129
- JP-A- 2003 227 062
- JP-A1-WO2017 119 011
- JP-B1- 6 002 355
- KR-B1- 100 832 801

## Description

The invention relates to a method and a device for high-throughput cutting of a ribbon-type substrate into separated pieces according to the preamble of claims 1 and 6 respectively (see for example JP 6 002355 B1). The method and device may be applied e.g. to separating electrode sheets for a battery. Technological background

For example for applications such as in electric or hybrid cars, batteries such as lithium-ion batteries have to be produced in large numbers and with a high energy storage capacity and/or high energy storage density.

In order to build up high energy lithium-ion batteries with maximum volume utilization, inactive cell components such as current collector foils, polymeric binder and/or conductive agent should be minimized. Also, thick electrodes may be prepared but may become brittle e.g. due to intrinsic properties.

In state of the art battery cell manufacturing processes, fast winding technologies are generally applied in order to increase a cell throughput. Nevertheless, electrodes such as anodes and cathodes with critical film thicknesses and high active material proportions generally cannot be wound without possibly inducing film cracking leading to film delamination from substrates and hence to possible shorting of cells under challenging operation. Finally, thick electrodes for high energy cells of the next generation can only be put together by advanced stacking technologies requiring an upstream electrode separation process out of ribbon-type substrates provided e.g. as electrode coils.

Laser cutting technologies are preferred for separating electrode sheets from a ribbon-type electrode substrate instead of knife cutting which may lead to film delamination during the cutting process due to its mechanical character.

### Summary of the invention

The present invention proposes a method and a device for high-throughput cutting of a ribbon-type substrate, particularly for an electrode of a battery, particularly for an electrode of a lithium ion battery, into separated pieces or sheets as defined in the independent claims. Advantageous embodiments are defined in the dependent claims and the following specification.

### Advantages of the invention

Embodiments of the present invention may enable cutting a ribbon-type substrate into separated pieces with a very high cutting rate. Furthermore, the cutting process may be established such that the separated substrate pieces are not significantly deteriorated with respect to their electrical, mechanical and/or chemical characteristics. For example, no excessive burr is introduced as a result of the cutting process. Accordingly, a high-throughput and high-quality production of electrode sheets to be applied e.g. in battery production may be provided.

According to the present invention, a method of high-throughput cutting of a ribbon-type substrate into separated pieces is defined in claim 1. The method comprises the following steps, possibly but not necessarily in the indicated order: The substrate is conveyed along a conveyance path at a conveyance velocity. The substrate is irradiated with a continuous wave (cw) laserbeam. Therein, the cw laserbeam coming from a laser source is deviated using a 2D polygon scanner. The 2D polygon scanner comprises (i) a polygon scanner including a rotation axis being arranged such as to deviate the cw laserbeam in an y-direction perpendicular to the conveyance path, and (ii) a galvo scanner including a pivoting axis being arranged such as to deviate the cw laserbeam in a x-direction parallel to the conveyance path. For example, the polygon scanner may include a rotation axis parallel to the conveyance path and the galvo scanner may include a pivoting axis transverse to the conveyance path. In the method, in a single scan, the 2D polygon scanner is controlled such that, while the cw laserbeam is deviated by the polygon scanner in the y-direction to traverse the conveyance path, the galvo scanner deviates the cw laserbeam in the x-direction such as to compensate the conveyance velocity, such that the cw laserbeam is scanned along a surface of the substrate in a direction perpendicular to a longitudinal extension of the substrate. Therein, for completing a single cut through the substrate, a set of plural repeated single scans is performed.

Further according to the present invention, a cutting device for high-throughput cutting of a ribbon-type substrate into separated pieces is defined in claim 6. The device is configured for performing the method according to an embodiment of the first aspect. Particularly, the device may comprise a conveyor for conveying the substrate along the conveyance path at the conveyance velocity, a laser source for irradiating the substrate with the cw laserbeam, a 2D polygon scanner including a polygon scanner and a galvo scanner as defined above for deviating the cw laserbeam coming from the laser source, and a controller for controlling the operation of the 2D polygon scanner. The 2D polygon scanner and the controller may be configured such that, in a single scan, the 2D polygon scanner is controlled such that, while the cw laserbeam is deviated by the polygon scanner in the y-direction to traverse the conveyance path, the galvo scanner deviates the cw laserbeam in the x-direction such as to compensate the conveyance velocity, such that the cw laserbeam is scanned along a surface of the substrate in a direction perpendicular to a longitudinal extension of the substrate, wherein, for completing a single cut through the substrate, a set of plural repeated single scans is performed.

Ideas underlying embodiments of the present invention may be interpreted as being based, inter alia and without restricting the scope of the invention, on the following observations and recognitions.

As indicated above, there are applications for example in battery manufacturing in which large numbers of substrate sheets forming for example electrodes have to be produced. The substrate sheets may be cut from a ribbon-type substrate. The ribbon-type substrate may have a quasi-two-dimensional, elongate geometry. Such ribbon-type substrate may have an electrically conductive layer such as a metal layer coated with an active material such as NCA (nickel cobalt aluminum oxide) or any other active material applicable as cathode material or anode material in a battery. Optionally, there may be portions of the ribbon-type substrate which are not coated with active material and which may form for example flags via which the electrode may be electrically contacted or connected to other electrodes. The ribbon-type substrate may have a width of for example a few hundred millimeters, e.g. about 200 mm, and a length of many meters. In a cutting process, separate pieces or sheets are to be cut from such ribbon-type substrate.

Contactless cutting methods such as laser cutting are preferred as non-contactless cutting methods such as mechanically cutting with a knife-type device may excessively stress the electrode material and may result in deteriorations such as delamination of the active material layer.

In principle, a variety of laser cutting techniques is known. However, it has been found that many of these known techniques are not beneficially applicable in battery electrode manufacturing.

For example, high-power laser cutting is known. However, generally, upon such high-power laser cutting, significant amounts of heat are deposited within a substrate to be cut. While this may be no problem in many other applications, such excessive heat may damage the active material and/or the conductive layer of a battery electrode.

In order to reduce such heat deposition, pulsed high-power lasers have been applied. Therein, very short pulses of laser light for example in a nanosecond or picosecond or even femtosecond regime are emitted towards a substrate to be cut. Such short high-power laser pulses may ablate substrate material without depositing excessive heat into remaining substrate material. However, as there are substantial downtimes between the laser pulses, a cutting speed is significantly lower than with non-pulsed laser cutting. Accordingly, such pulsed laser cutting may result in a bottleneck in a high-throughput battery electrode production process.

Embodiments of the present application may avoid the deficiencies of both above mentioned approaches.

Therein, a laser source generating a cw (continuous wave) laserbeam, i.e. a non-pulsed laserbeam, is applied for irradiating a portion of the ribbon-type substrate where a cut is to be made. Such laser source may have a sufficiently high cw power of for example more than 1 kW. Using such high-power cw laser source, the material of the ribbon-type substrate may be quickly locally melted and/or evaporated or ablated in order to generate the intended cut.

However, generally, in order to completely cut through the ribbon-type substrate in a single scan, substantial amounts of heat would have to be introduced into the cut substrate area, possibly resulting in the deficiencies mentioned above.

In order to avoid any damages to the electrode material due to such excessive heat, it is intended to complete a cut through the entire substrate not with only a single scan but with a combination of a plurality of scans.

Therein, it is intended to perform each of the plurality of scans with such elevated velocity that, on the one hand, no excessive heat is locally introduced into the substrate during a single scan and, on the other hand, the plurality of scans may be performed within a very short period of time.

Furthermore, in order to obtain high processing efficiency, the ribbon-type substrate should be conveyed along a conveyance path at a substantial conveyance velocity such that, after a cut at a first location is completed, another cut may quickly be made at a next location, and so on. For such purpose, it may be preferred to convey the ribbon-type substrate continuously, i.e. without having to stop the substrate each and every time a cut is to be made. Accordingly, it is preferred to perform the cutting procedure while the substrate is moving at the conveyance velocity.

However, in view of such rapid motion of the substrate during conveyance, it has been found that the cutting procedure needs to be specifically adapted in order to, on the one hand, realise precise and reliable cutting and, on the other hand, avoid any damages to the substrate material. Also for this reason, it may be beneficial to enable performing a plurality of scans with a high-power laserbeam within a very short period of time.

In order to solve the complex task of both, scanning the high-power cw laserbeam with a very high scanning velocity while at the same time taking into account the rapid motion of the substrate being conveyed with the substantial conveyance velocity, it is proposed to apply a specific 2D polygon scanner for deviating the cw laserbeam. Such 2D polygon scanner comprises both, a polygon scanner and a galvo scanner. Both types of scanners use displaceable reflective surfaces in order to deviate or deflect the laserbeam.

In a polygon scanner, such reflective surfaces are arranged along a circumference of a polygonal base body. The polygonal base body may be rotated. Accordingly, the laserbeam coming from the laser source impinges on to one of the moving reflective surfaces and, upon rotational displacement of the base body, is successively scanned linearly from a starting position to an end position before then starting again at the starting position when the laserbeam reaches the adjacent next reflective surface. As the polygonal base body may be rotated at high rotation velocities, extremely high scanning velocities of for example 100 m/s, possibly e.g. up to 1300 m/s, may be realised.

Accordingly, upon arranging the polygon scanner e.g. with its rotation axis being parallel to the conveyance path of the conveyed substrate, the high-power cw laserbeam may be rapidly scanned in a direction perpendicular or at least substantially perpendicular to the conveyance path, this direction being referred to herein as y-direction.

However, as the substrate is continuously conveyed during the scanning process, simply using a polygonal scanner would result in the scanning path on the ribbon-type substrate being inclined with respect to the conveyance direction. Furthermore, when a plurality of scans is to be performed, such scans would be offset with respect to each other as, when the next scan starts at the starting point, the substrate has meanwhile moved in the conveyance direction by a certain distance. Accordingly, the plural scans would not locally coincide or overlap such that no complete cutting could be performed using the combination of plural scans.

Therefore, additionally to the polygon scanner, the galvo scanner is applied. Therein, the term galvo scanner shall be generic and shall refer to a scanner in which, similar to a galvanometer, a base body with a reflective surface may be pivoted around a pivoting axis. Arranging such galvo scanner with its pivoting axis being transverse to the conveyance path of the conveyed substrate, the cw laserbeam may be deviated in a direction parallel to the conveyance path, this direction being referred to herein as x-direction. Accordingly, the galvo scanner may deviate the laserbeam in or against the direction in which the substrate is conveyed. Accordingly, the galvo scanner may be applied for partially or completely compensating the conveyance velocity.

Accordingly, using the 2D polygonal scanner, very rapid scanning in the y-direction may be realised due to the included polygon scanner while the conveyance velocity of the substrate may be compensated using the included galvo scanner.

As a combined effect of the cooperation of the polygon scanner and the galvo scanner, the cw laserbeam may be deviated and scanned such that it repeatedly moves along a surface of the substrate in a direction perpendicular to the longitudinal extension of the substrate. Accordingly, cuts extending perpendicular to the side edges of the ribbon-type substrate may be made. Thus, for example separate rectangular pieces may be cut from the substrate.

According to an embodiment, the polygon scanner may be configured such as to scan the cw laserbeam in the y-direction along the surface of the substrate with a scanning velocity being at least 100 times the conveyance velocity with which the substrate is conveyed along the conveyance path.

For example, a typical conveyance velocity in the x-direction may be in a range of 0.1 to 0.5 m/s whereas a typical scanning velocity in the y-direction using a polygon scanner may be in a range of between 50 and 1300 m/s. Accordingly, while the substrate is conveyed along the conveyance path, the laserbeam may be scanned multiple times in the y-direction for traversing the entire substrate transverse to its longitudinal extension. As the scanning velocity is very high, such multiple scans may be performed in a very short period of time such that the substrate is conveyed along the conveyance path only for a short distance during the cutting process and such that the conveyance velocity may be easily compensated using the deviation of the laserbeam accomplished by the galvo scanner during a cutting process.

According to an embodiment of the method proposed herein, the substrate can be conveyed and bent along a curved conveyance path. Therein, the 2D polygon scanner comprises then an optics implementing a z-correction for a focus adjustment such that the cw laserbeam remains substantially focused onto the surface of the bent substrate while being deviated in various orientations in the x-direction. For implementing such method, the device proposed herein may further comprise an optics implementing the z-correction for the focus adjustment such that the cw laserbeam remains substantially focused onto the surface of the bent substrate while being deviated in various orientations in the x-direction when the substrate is conveyed and bent along a curved conveyance path.

In other words, in large-scale manufacturing, the ribbon-type substrate may typically not only be conveyed linearly but, at least at certain locations, is conveyed along a curved conveyance path. For example, the substrate may be conveyed using a rotating limp wheel. As the substrate may be specifically supported in such curved conveyance path areas, it may be beneficial to provide for the cutting of the separated pieces in such curved conveyance path areas.

However, when the conveyance path is curved, a distance between an irradiated location on the surface of the substrate, on the one hand, and the 2D polygon scanner, on the other hand, may vary depending on where the surface of the substrate is currently irradiated. In other words, as the substrate is continuously conveyed during a cutting process and such conveyance is compensated by suitably deviating the laserbeam using the galvo scanner, a distance to be bridged by the laserbeam before hitting the surface of the substrate may be different at the beginning and at the end of the cutting process.

However, a laserbeam is generally focused and may provide for a suitable laser power only within a specific depth of focus. Specifically, the depth of focus and a Rayleigh length may be dependent on a laser wavelength and/or of a beam radius in the focus area. Accordingly, without specific measures being taken, the laserbeam may become out of focus when being substantially deviated in the x-direction for compensating the conveyance velocity.

Providing the 2D polygon scanner with a specific optics may enable overcoming such problem. Such optics may comprise optical elements such as lenses, mirrors, etc. having specific optical characteristics due to for example their curvature such as to implement a suitable z-correction. With such z-correction, the focus of the laserbeam may be adjusted such that it remains substantially onto the surface of the bent substrate for a sufficient period of time, even when the substrate is substantially moved along the conveyance path and therefore the laserbeam is deviated in various orientations in order to compensate the corresponding x-direction conveyance.

According to an embodiment of the method, the substrate is conveyed using a rotating limp wheel and the substrate is irradiated with the cw laserbeam while being bent around a superficies surface of the limp wheel. Accordingly, in an embodiment of the device, the conveyor comprises the rotatable limp wheel, and the device is configured such that the substrate is irradiated with the cw laserbeam while being bent around a superficies surface of the limp wheel.

The limp wheel may serve for driving the ribbon-type substrate. For example, the substrate may be adhered to a superficies surface of the limp wheel using a locally generated vacuum or other means. The limp wheel may also be used for stacking the separated substrate pieces onto other electrode components such as for example a sheet-like separator continuously supplied by a an adjacent supplying mechanism.

Alternatively to transporting with a limp wheel, it may be possible to convey the substrate by a planar moving conveyor belt.

According to an embodiment, the limp wheel comprises linear recesses extending at the superficies surface of the limp wheel in a direction parallel to a rotation axis of the limp wheel. Therein, during each of the single scans, the 2D polygon scanner is controlled such that the cw laserbeam is scanned along a surface of the substrate in an area positioned above one of the recesses. For an embodiment of the device, this means that the device comprising its 2D polygonal scanner and its controller is configured such that, during the single scan, the 2D polygon scanner is controlled for suitably scanning the cw laserbeam along the surface of the substrate in the area positioned above one of the recesses.

In other words, the limp wheel may have a plurality of linear recesses being distributed along its circumferential surface, each linear recess extending in parallel to the rotation axis of the limp wheel. Such recesses may have a width and depth of for example a few millimeters, for example between 1 mm and 5 mm. A circumferential distance between neighboring recesses may correspond to a width of the pieces to be cut from the ribbon-type substrate and may be for example between 7 cm and 10 cm.

The recesses are provided in order to avoid that, during cutting the substrate, the applied laserbeam damages the limp wheel. By deviating the laserbeam using the 2D polygon scanner such that the laserbeam is scanned along the substrate in an area adjacent to an underlying recess, it may be avoided that the focused laserbeam locally excessively heats and/or ablates portions of the limp wheel underneath the cut through the substrate.

According to an embodiment of the method, in the set of plural single scans, the single scans are off-set in the x-direction with respect to each other. For an embodiment of the device, the controller controls the 2D polygon scanner such that, in the set of plural single scans, the single scans are off-set in the x-direction with respect to each other.

In other words, for example the galvo scanner of the 2D polygon scanner may be specifically controlled during a single cutting process such that, between the plural scans comprised in such cutting process, it does not compensate the conveyance velocity always in exactly the same manner. Instead, the x-deviation accomplished by the galvo scanner may sometimes slightly overcompensate and sometimes slightly undercompensate the conveyance velocity. Accordingly, the various scans performed for completing the single cut do not exactly locally coincide on the surface of the substrate but are slightly offset in the x-direction with respect to each other. Accordingly, each single scan does not ablate the substrate exactly along the same line but along lines being slightly offset with respect to each other. Therein, subsequent scans may partially overlap or may be slightly spaced in the x-direction with respect to each other.

Due to such offsetting of single scans during cut formation, excessive burr formation may be avoided. Particularly, while a single scan with the high-power cw laserbeam may produce some burr, i.e. for example microscopic particles being ablated and then deposited at an adjacent area, such burred area may at least partially be removed in a subsequent offset scan of the laserbeam (remote off-set laser cutting).

It shall be noted that possible features and advantages of embodiments of the invention are described herein partly with respect to method and partly with respect to a device for high-throughput cutting. One skilled in the art will recognize that the features may be suitably transferred from one embodiment to another and features may be modified, adapted, combined and/or replaced, etc. in order to come to further embodiments of the invention.

### Brief description of the drawings

In the following, advantageous embodiments of the invention will be described with reference to the enclosed drawings. However, neither the drawings nor the description shall be interpreted as limiting the invention.
Fig. 1 shows a representation of a device for high-throughput cutting according to an exemplary embodiment of the invention;
Fig. 2 shows a representation of a detail of a limp wheel used in an exemplary embodiment of the invention;
Fig. 3 shows a representation of a laser cut on a limp wheel according to an exemplary embodiment of the invention;
Fig. 4 shows a representation of details of a device for high-throughput cutting according to an exemplary embodiment of the invention;
Fig. 5 shows a representation of a cutting process according to an exemplary embodiment of the invention;
Fig. 6 shows a representation of a comparison between a single full cut and a multi full cut according to an exemplary embodiment of the invention;
Fig. 7 shows a representation of an offset cutting process according to an exemplary embodiment of the invention; and
Fig. 8 shows a representation of electrodes cut according to an exemplary embodiment of the invention.

The figures are only schematic and not to scale. Same reference signs refer to same or similar features.

### Description of embodiments of the invention

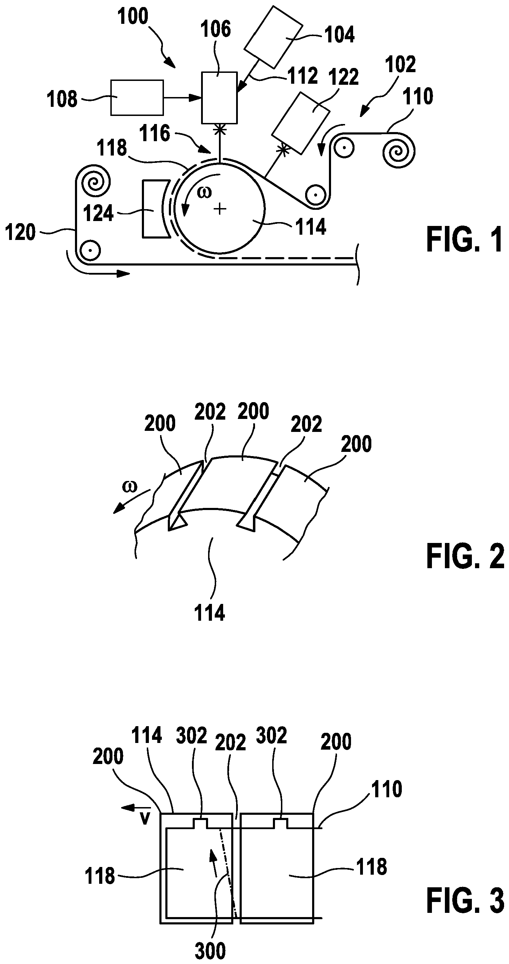

Fig. 1 shows a representation of a device 100 for high-throughput cutting according to an exemplary embodiment of the invention. The device 100 comprises a conveyor 102, a laser source 104, a 2D polygon scanner 106 and a controller 108. The conveyor 102 is configured to convey a ribbon type substrate 110 along a conveyance path at a conveyance velocity. The substrate 110 is moved in an x-direction. The laser source 104 is configured to irradiate the substrate 110 with a continuous wave laserbeam 112. The 2D polygon scanner 106 is configured to deviate the laserbeam 112 in the x-direction and transversely thereto in a y-direction. The controller 108 is configured to control the operation of the 2D polygon scanner 106.

In an embodiment, the conveyor 102 comprises a limp wheel 114. The limp wheel 114 is at least partially arranged inside a scan field 116 of the 2D polygon scanner 106. The substrate 110 is stored on a coil. The conveyance path starts at the coil and leads over rollers to the limp wheel 114. The limp wheel 114 rotates on its rotating axis with an angular speed ω corresponding to the conveyance velocity. A superficies surface of the limp wheel 114 moves in the x-direction.

The substrate 110 is attached to the limp wheel e.g. by means of suction. Inside the scan field 116, the laserbeam 112 cuts the substrate 110 into single pieces 118. To form the pieces 118, the substrate 110 is cut perpendicular to a direction of the conveyance path while it is fixed to the limp wheel 114. In order to facilitate the cut, the laserbeam 112 is scanned multiple times over an area of the substrate 110 designated for the cut. The cut pieces 118 are released from the limp wheel 114 and deposited on a moving separator 120 for further processing. The separator 120 is also a ribbon-type film unwound from a spool.
In an embodiment, at least one edge of the substrate 110 is processed by an extra laser scanner 122 arranged between the coil and the limp wheel 114. The extra laser scanner 122 cuts the edge of the substrate 110 in order to create flags for contacting the pieces 118. Here, the pieces 118 are electrodes.

In an embodiment, a cleaning device 124 is arranged between the scan field 116 and the separator 120. The cleaning device 124 is configured to clean the cut pieces 118 before they are released from the limp wheel 114 and deposited on the separator 120.

Fig. 2 shows a representation of a detail of a limp wheel 114 used in an exemplary embodiment of the invention. The limp wheel 114 essentially corresponds to the limp wheel in fig. 1. In addition, the limp wheel 114 is segmented into segments 200. The segments 200 are separated by recesses 202. The recesses 202 are aligned transverse to the edge of the limp wheel 114. The recesses 202 are narrow at the superficies surface of the limp wheel 114 and widen towards the bottom of the recess 202.

The segments 200 between the recesses 202 are curved. When the substrate is fixed to the segments 200 by means of suction, the substrate is bent to conform to the curvature of the segments 200.

The recesses 202 correspond to the areas of the substrate designated for the cuts (cutting edges). Due to the recesses 202, the surface of the limp wheel 114 is not heated by the laserbeam while it is travelling along the cuts.

In an embodiment, the limp wheel 114 has suction e.g. for cathode positioning. The recesses 202 are two millimeters wide at the surface of the limp wheel 114. Between the recesses 202, the segments 200 are 85 millimeters long, while the limp wheel 114 is 120 millimeters wide. In this configuration, the middle of the superficies surface of each segment 200 rises two millimeters above a plane through the edges of the segment 200.

Fig. 3 shows a representation of a laser pathway 300 on a limp wheel 114 according to an exemplary embodiment of the invention. The limp wheel 114 essentially corresponds to the limp wheel in the figures 1 and 2. Here, the substrate 110 is arranged on the limp wheel 114. The limp wheel 114 is wider than or of a same width as the substrate 110. Precut flags 302 along one edge of the substrate 110 are positioned on the segments 200 of the limp wheel 114. Here, the pieces 118 are electrodes. Each electrode comprises one flag 302. The cutting area between two pieces 118 is positioned above a recess 202 in the limp wheel 114.

As the substrate 110 moves in the x-direction at a conveyance velocity v, the laser travels in the y-direction at a scanning velocity. The cutting area is fixed to the limp wheel 114 and also moves in the x-direction at the conveyance velocity v. Therefore, the laser has to also travel in the x-direction along a pathway 300 that is slightly angled with respect to the cutting area. The angle results from a vector addition of the conveyance velocity v and the scanning velocity.

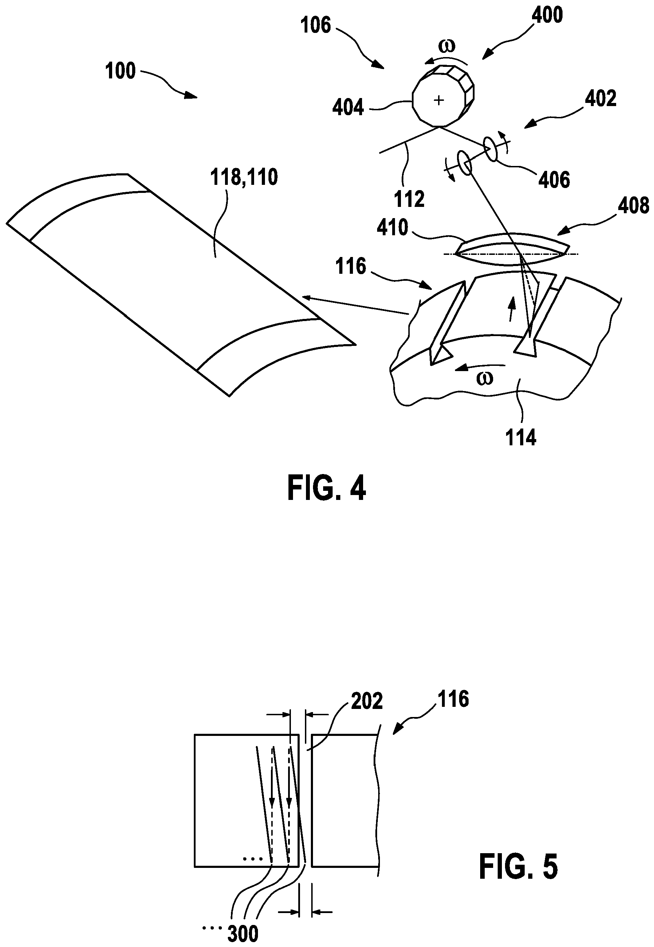

Fig. 4 shows a representation of details of a device 100 for high-throughput cutting according to an exemplary embodiment of the invention. The device 100 essentially corresponds to the device in fig. 1. Here, the 2D polygon scanner 106 is shown in more detail. The scanner 106 comprises a polygon scanner 400 and a galvo scanner 402. The laserbeam 112 is deviated perpendicular to the direction of the conveyance velocity by the polygon scanner 400. The galvo scanner 402 deviates the laserbeam 112 in the direction of the conveyance velocity. The polygon scanner 400 and the galvo scanner 402 are arranged along a path of the laserbeam 112. Here, the polygon scanner 400 is located upstream of the galvo scanner 402.

The polygon scanner 400 comprises a rotatable polygon mirror 404. Here, the polygon mirror 404 comprises 12 facets. In operation, the polygon mirror 404 rotates at an angular velocity ω_{Poly}. The galvo scanner 402 comprises at least one galvo mirror 406. The polygon mirror 404 rotates on an axis that is oriented perpendicular to the rotation axis of the limp wheel 114. The galvo mirror 406 pivots on a pivoting axis that is parallel to the rotation axis.

A focusing optics 408 is arranged between the 2D polygon scanner 106 and the limp wheel 114. The optics 408 is configured to correct the focus of the laserbeam 112 such that it conforms to the curved superficies surface of the limp wheel 114. In particular, the optics 408 is configured to adjust the focus along the curvature of the limp wheel 114 within the scan field 116. Generally, the optics 408 comprises at least one specially designed and ground optical cylindrical-type lens 410, wherein a curvature of a surface of the lens 410 slightly deviates from a purely cylindrical shape in order to establish the required focus correction.

The 2D polygon scanner 106 steers the laserbeam 112 over essentially the same area of the substrate 110 multiple times. The substrate 110 in that area is ablated step by step until there is a gap between two pieces 118.

Fig. 5 shows a representation of a cutting process according to an exemplary embodiment of the invention. The cutting process essentially corresponds to the cutting process in fig. 4. Here, a top-view of the scan field 116 on the limp wheel 114 is shown. The laser pathway 300 is centered on the two millimeter wide recess 202 in the limp wheel 114. Multiple pathways 300 are shown inside the scan field 116. The laser pathways 300 are aslant by 0.95 millimeters from one edge of the limp wheel 114 to the other as due to the conveyance velocity of 500 millimeters per second, the limp wheel 114 covers these 0.95 millimeters in the conveyance direction in the time of the 0.0019 seconds it takes the laserbeam to move from one edge of the limp wheel 114 to the other. The laser pathways 300 are aligned parallel to each other and are spaced 0.95 millimeters apart since the laserbeam jumps from one end of a pathway 300 to the beginning of another pathway 300 instantaneously as the laserbeam hits the next facet of the polygon mirror.

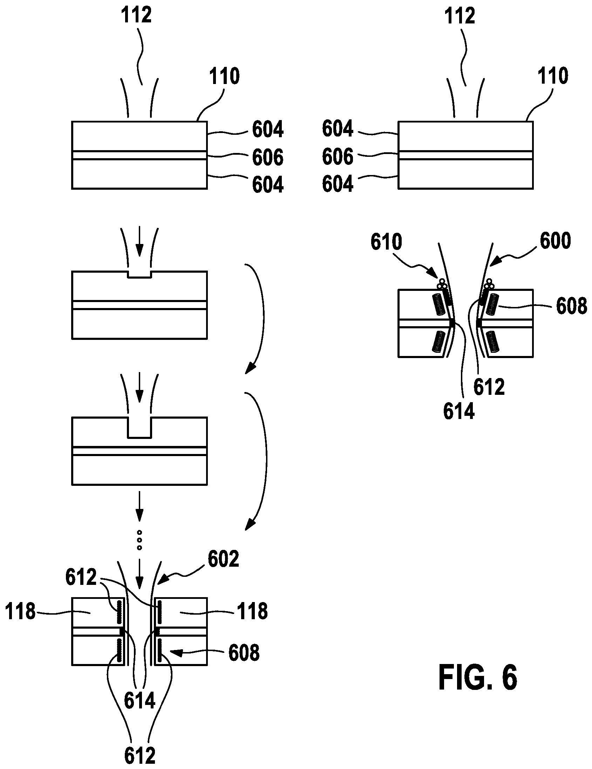

Fig. 6 shows a representation of a comparison between a single full cut 600 through the substrate 110 and a multi full cut 602 through the substrate 110 according to an exemplary embodiment of the invention. The multi full cut 602 essentially corresponds to the cutting process in fig. 5. Here, the substrate 110 comprises multiple layers 604, 606. Two layers 604 of a nickel-cobalt-aluminum mix (NCA) are arranged on either side of an aluminum layer 606.

For the single full cut 600, the laserbeam 112 is applied to the substrate 110 slowly enough to ablate and melt through the substrate 110 in one pass. This single application results in a large heat affected zone 608. Additionally, the high power concentration leads to a burr formation 610 due to material deposition adjacent to the cut 600. The NCA 612 as well as the aluminum 614 on the sides of the cut 600 are melted to a high degree.

For the multi full cut 602, the laserbeam 116 is applied to the substrate 110 for extremely short periods of time as it moves fast across the substrate 110. With each subsequent passing of the laserbeam, a small amount of material is ablated. The ablated material is transformed into such small particles that no substantial burr formation occurs. As the material is able to cool after each passing, the heat affected zone 608 and melted materials 612, 614 are virtually nonexistent.

In other words, fig. 6 shows a multi-full cut using multi-kW laser radiation (single-mode) 602 of foils using ultra-high-speed 2D polygon scanning technology. The cut pieces 118 can be used as cathodes in a battery. The multi cut 602 is accomplished by a laser 116 steered with a galvo scanner and a polygon scanner on a fast rotating limp wheel in a curved scan field. The curved scan field requires a continuous focus correction in the z-direction due to the curved surface of the limp wheel. The rotation of the limp wheel necessitates a continuous lateral beam correction in the x- and y-directions (on-the-fly). The focus correction is achieved through a specially designed and ground lens in combination with the polygon scanner.

The cut 602 is performed in a ∼194µm thick NCA (LiNiCoAlO2) (or its modifications, also anodes, silicon, sodium-ion, ...) composite electrode substrate 110 on a rotating limp wheel segment for a subsequent cathode placement onto a moving separator for cathode bagging for high-speed stacking. Improved quality is achieved due to the fact that small amounts of energy are applied multiple times instead of applying a large amount of energy at once.

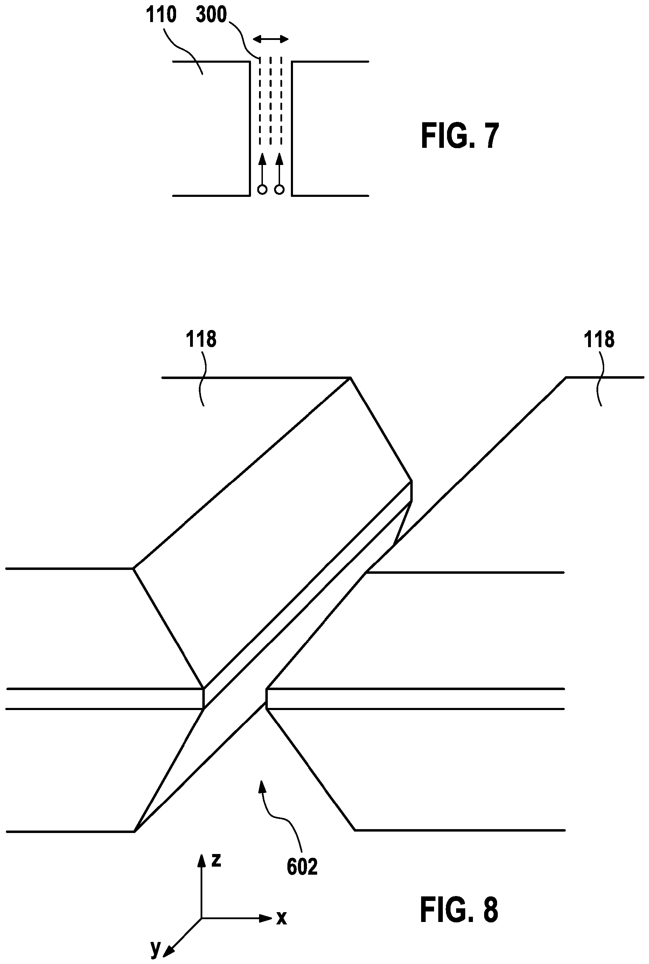

Fig. 7 shows a representation of an offset cutting process (remote off-set laser-cutting) according to an exemplary embodiment of the invention. The cutting process essentially corresponds to the cutting process in fig. 5. In contrast to this, the laser pathways 300 are slightly offset in the x-direction. The offset overcompensates or undercompensates the distance covered by the substrate 110 during the duration of one passing. As a result, the laserbeam does not hit the same area at every passing. The areas can be overlapping.

Fig. 8 shows a representation of pieces 118 cut according to an exemplary embodiment of the invention. The pieces 118 are cut using the offset cutting process shown in fig. 7. On the surfaces of the electrodes, a larger area than in the center of the pieces 118 was irradiated by subsequent passes of the laserbeam. Therefore, the cut 602 between the pieces 118 narrows as the trench in the substrate 110 deepens. The pieces 118 are slightly chamfered and have no burrs.

## Claims

1. Method of high-throughput cutting of a ribbon-type substrate (110) into separated pieces (118), the method comprising:
conveying the substrate (110) along a conveyance path at a conveyance velocity;
irradiating the substrate (110) with a cw laserbeam (116),
wherein the cw laserbeam (116) coming from a laser source (104) is deviated using a 2D polygon scanner (106),
being **characterised in that** the 2D polygon scanner (106) comprises
a polygon scanner (400) including a rotation axis parallel to the conveyance path such as to deviate the cw laserbeam (116) in an y-direction perpendicular to the conveyance path, and
a galvo scanner (402) including a pivoting axis perpendicular to the conveyance path such as to deviate the cw laserbeam (116) in a x-direction parallel to the conveyance path;
wherein, in a single scan, the 2D polygon scanner (106) is controlled such that, while the cw laserbeam (116) is first deviated by the polygon scanner (400) in the y-direction to traverse the conveyance path, the galvo scanner (402) deviates further the cw laserbeam (116) in the x-direction such as to compensate the conveyance velocity, such that the cw laserbeam (116) is scanned along a surface of the substrate (110) in a direction perpendicular to a longitudinal extension of the substrate (110),
wherein, for completing a single cut (602) through the substrate (110), a set of plural repeated single scans is performed.

2. Method of claim 1,
wherein the substrate (110) is conveyed and bent along a curved conveyance path,
wherein the 2D polygon scanner (106) comprises an optics (408) implementing a z-correction for a focus adjustment such that the cw laserbeam (116) remains focused onto the surface of the bent substrate (110) while being deviated in various orientations in the x-direction.

3. Method of one of claims 1 and 2,
wherein the substrate (110) is conveyed using a rotating limp wheel (114) and the substrate (110) is irradiated with the cw laserbeam (116) while being bent around a superficies surface of the limp wheel (114).

4. Method of claim 3,
wherein the limp wheel (114) comprises linear recesses (202) extending at the superficies surface of the limp wheel (114) in a direction parallel to a rotation axis of the limp wheel (114), and
wherein, during each of the single scans, the 2D polygon scanner (106) is controlled such that the cw laserbeam (116) is scanned along a surface of the substrate (110) in an area positioned above one of the recesses (202).

5. Method of one of claims 1 to 4,
wherein, in the set of plural single scans, the single scans are off-set in the x-direction with respect to each other.

6. A cutting device (100) for high-throughput cutting of a ribbon-type substrate (110) into separated pieces (118), the device (100) comprising a conveyor (102) for conveying the substrate (110) along the conveyance path at the conveyance velocity;
a laser source (104) for irradiating the substrate (110) with the cw laserbeam (116);
a 2D polygon scanner (106) for deviating the cw laserbeam (116) coming from the laser source (104);
a controller (108) for controlling operation of the 2D polygon scanner (106); being **characterised in that** J Z the 2D polygon scanner (106) comprises
a polygon scanner (400) including a rotation axis parallel to the conveyance path such as to deviate the cw laserbeam (116) in the y-direction perpendicular to the conveyance path, and
a galvo scanner (402) including a rotation axis perpendicular to the conveyance path such as to deviate the cw laserbeam (116) in the x-direction parallel to the conveyance path;
wherein the 2D polygon scanner (106) and the controller (108) are configured such that, in a single scan, the 2D polygon scanner (106) is controlled such that, while the cw laserbeam (116) is deviated by the polygon scanner (400) in the y-direction to traverse the conveyance path, the galvo scanner (402) deviates the cw laserbeam (116) in the x-direction such as to compensate the conveyance velocity, such that the cw laserbeam (116) is scanned along a surface of the substrate (110) in a direction perpendicular to a longitudinal extension of the substrate (110); and
wherein, for completing a single cut (602) through the substrate (110), a means for performing a set of plural repeated single scans is provided.

7. Device (100) according to claim 6, further comprising an optics (408) implementing a z-correction for a focus adjustment such that the cw laserbeam (116) remains focused onto the surface of the bent substrate (110) while being deviated in various orientations in the x-direction when the substrate (110) is conveyed and bent along a curved conveyance path.

8. Device (100) according to one of the claims 6 to 7, wherein the conveyor (102) comprises a rotatable limp wheel (114), and the device (100) is configured such that the substrate (110) is irradiated with the cw laserbeam (116) while being bent around a superficies surface of the limp wheel (114).

9. Device (100) according to claim 8,
wherein the limp wheel (114) comprises linear recesses (202) extending at the superficies surface of the limp wheel (114) in a direction parallel to a rotation axis of the limp wheel (114), and
wherein the device (100) is configured such that, during the single scan, the 2D polygon scanner (106) is controlled such that the cw laserbeam (116) is scanned along a surface of the substrate (110) in an area positioned above one of the recesses (202).

10. Device (100) according to one of the claims 6 to 9,
wherein the controller (108) controls the 2D polygon scanner (106) such that, in the set of plural single scans, the single scans are off-set in the x-direction with respect to each other.

11. Device (100) according to one of the claims 6 to 10,
wherein the laser source (104) has a cw laser power of more than one kilowatt.

12. Device (100) according to one of the claims 6 to 11,
wherein the polygon scanner (400) is configured such as to scan the cw laserbeam (116) in the y-direction along the surface of the substrate (110) with a scanning velocity being at least 100 times the conveyance velocity with which the substrate (110) is conveyed along the conveyance path.

## Patentansprüche

1. Verfahren zum Hochdurchsatzschneiden eines bandartigen Substrats (110) in getrennte Teile (118), wobei das Verfahren umfasst:
Transportieren des Substrats (110) entlang eines Transportpfads mit einer Transportgeschwindigkeit;
Bestrahlen des Substrats (110) mit einem cw-Laserstrahl (Dauerstrichlaserstrahl) (116),
wobei der cw-Laserstrahl (116), der von einer Laserquelle (104) kommt, unter Verwendung eines 2D-Polygonscanners (106) abgelenkt wird,
**dadurch gekennzeichnet, dass** der 2D-Polygonscanner (106) einen Polygonscanner (400) umfasst, der eine Rotationsachse parallel zu dem Transportpfad einschließt, um den cw-Laserstrahl (116) in einer y-Richtung senkrecht zu dem Transportpfad abzulenken, und
einen Galvoscanner (402), der eine Schwenkachse senkrecht zu dem Transportpfad einschließt, um so den cw-Laserstrahl (116) in einer x-Richtung parallel zu dem Transportpfad abzulenken;
wobei der 2D-Polygonscanner (106) in einem einzelnen Scan so gesteuert wird, dass, während der cw-Laserstrahl (116) zuerst durch den Polygonscanner (400) in der y-Richtung abgelenkt wird, um den Transportpfad zu durchqueren, der Galvoscanner (402) den cw-Laserstrahl (116) in der x-Richtung weiter ablenkt, um so die Transportgeschwindigkeit zu kompensieren, so dass der cw-Laserstrahl (116) entlang einer Oberfläche des Substrats (110) in einer Richtung senkrecht zu einer Längsausdehnung des Substrats (110) scannt,
wobei zum Komplettieren eines einzelnen Schnitts (602) durch das Substrat (110) hindurch ein Satz von mehreren wiederholten einzelnen Scans durchgeführt wird.

2. Verfahren nach Anspruch 1,
wobei das Substrat (110) entlang eines gekrümmten Transportpfads transportiert und gebogen wird, wobei der 2D-Polygonscanner (106) eine Optik (408) umfasst, die eine z-Korrektur für eine Fokusanpassung implementiert, so dass der cw-Laserstrahl (116) auf die Oberfläche des gebogenen Substrats (110) fokussiert bleibt, während in verschiedene Orientierungen in der x-Richtung abgelenkt wird.

3. Verfahren nach einem der Ansprüche 1 und 2,
wobei das Substrat (110) unter Verwendung eines rotierenden Notlaufrads (114) transportiert wird, und das Substrat (110) mit dem cw-Laserstrahl (116) bestrahlt wird, während um eine Mantelfläche des Notlaufrads (114) herum gebogen wird.

4. Verfahren nach Anspruch 3,
wobei das Notlaufrad (114) lineare Aussparungen (202) umfasst, die sich auf der Mantelfläche des Notlaufrads (114) in einer Richtung parallel zu der Rotationsachse des Notlaufrads (114) erstrecken, und
wobei der 2D-Polygonscanner (106) während jedes der einzelnen Scans so gesteuert wird, dass der cw-Laserstrahl (116) entlang einer Oberfläche des Substrats (110) in einem Bereich scannt, der oberhalb einer der Aussparungen (202) positioniert ist.

5. Verfahren nach einem der Ansprüche 1 bis 4, wobei die einzelnen Scans in dem Satz von mehreren einzelnen Scans in der x-Richtung in Bezug zueinander versetzt sind.

6. Schneidvorrichtung (100) zum Hochdurchsatzschneiden eines bandartigen Substrats (110) in getrennte Teile (118), wobei die Vorrichtung (100) eine Transporteinrichtung (102) zum Transportieren des Substrats (110) entlang des Transportpfads mit der Transportgeschwindigkeit umfasst;
eine Laserquelle (104) zum Bestrahlen des Substrats (110) mit dem cw-Laserstrahl (116);
einen 2D-Polygonscanner (106) zum Ablenken des cw-Laserstrahls (116), der aus der Laserquelle (104) kommt;
eine Steuerung (108) zum Steuern des Betriebs des 2D-Polygonscanners (106); **dadurch gekennzeichnet, dass** der 2D-Polygonscanner (106) umfasst:
einen Polygonscanner (400), der eine Rotationsachse parallel zu dem Transportpfad einschließt, um so den cw-Laserstrahl (116) in der y-Richtung senkrecht zu dem Transportpfad abzulenken, und
einen Galvoscanner (402), der eine Rotationsachse senkrecht zu dem Transportpfad einschließt, um so den cw-Laserstrahl (116) in der x-Richtung parallel zu dem Transportpfad abzulenken;
wobei der 2D-Polygonscanner (106) und die Steuerung (108) so ausgestaltet sind, dass der 2D-Polygonscanner (106) in einem einzelnen Scan so gesteuert wird, dass, während der cw-Laserstrahl (116) durch den Polygonscanner (400) in der y-Richtung abgelenkt wird, um den Transportpfad zu durchqueren, der Galvoscanner (402) den cw-Laserstrahl (116) in der x-Richtung ablenkt, um so die Transportgeschwindigkeit zu kompensieren, so dass der cw-Laserstrahl (116) entlang einer Oberfläche des Substrats (110) in einer Richtung senkrecht zu einer Längsausdehnung des Substrats (110) scannt; und
wobei zum Komplettieren eines einzelnen Schnitts (602) durch das Substrat (110) hindurch ein Mittel zum Durchführen eines Satzes von mehreren wiederholten einzelnen Scans bereitgestellt wird.

7. Vorrichtung (100) nach Anspruch 6,
des Weiteren umfassend eine Optik (408), die eine z-Korrektur für eine Fokusanpassung implementiert, so dass der cw-Laserstrahl (116) auf der Oberfläche des gebogenen Substrats (110) fokussiert bleibt, während in verschiedenen Orientierungen in der x-Richtung abgelenkt wird, wenn das Substrat (110) entlang eines gekrümmten Transportpfads transportiert und gebogen wird.

8. Vorrichtung (100) nach einem der Ansprüche 6 bis 7,
wobei die Transporteinrichtung (102) ein rotierbares Notlaufrad (114) umfasst, und die Vorrichtung (100) so ausgestaltet ist, dass das Substrat (110) mit dem cw-Laserstrahl (116) bestrahlt wird, während es um eine Mantelfläche des Notlaufrads (114) herum gebogen wird.

9. Vorrichtung (100) nach Anspruch 8,
wobei das Notlaufrad (114) lineare Aussparungen (202) umfasst, die sich auf der Mantelfläche des Notlaufrads (114) in einer Richtung parallel zu der Rotationsachse des Notlaufrads (114) erstrecken, und
wobei die Vorrichtung (100) so ausgestaltet ist, dass der 2D-Polygonscanner (106) während des einzelnen Scans so gesteuert wird, dass der cw-Laserstrahl (116) entlang einer Oberfläche des Substrats (110) in einem Bereich scannt, der oberhalb einer der Aussparungen (202) positioniert ist.

10. Vorrichtung (100) nach einem der Ansprüche 6 bis 9,
wobei die Steuerung (108) den 2D-Polygonscanner (106) so steuert, dass in dem Satz der mehreren einzelnen Scans die einzelnen Scans in der x-Richtung in Bezug zueinander versetzt sind.

11. Vorrichtung (100) nach einem der Ansprüche 6 bis 10,
wobei die Laserquelle (104) eine cw-Laserleistung von mehr als ein Kilowatt hat.

12. Vorrichtung (100) nach einem der Ansprüche 6 bis 11, wobei der Polygonscanner (400) so ausgestaltet ist, dass er den cw-Laserstrahl (116) mit einer Scangeschwindigkeit, die mindestens dem 100-fachen der Transportgeschwindigkeit entspricht, mit der das Substrat (110) entlang des Transportpfads transportiert wird, in der y-Richtung entlang der Oberfläche des Substrats (110) scannt.

## Revendications

1. Procédé de découpe à haut débit d'un substrat de type ruban (110) en pièces séparées (118), le procédé comprenant :
le transport du substrat (110) le long d'un chemin de transport à une vitesse de transport ;
l'irradiation du substrat (110) avec un faisceau laser cw (116),
le faisceau laser cw (116) provenant d'une source laser (104) étant dévié à l'aide d'un dispositif de balayage polygonal 2D (106), **caractérisé en ce que** le dispositif de balayage polygonal 2D (106) comprend un dispositif de balayage polygonal (400) comprenant un axe de rotation parallèle au trajet de transport de manière à dévier le faisceau laser cw (116) dans une direction y perpendiculaire au trajet de transport, et un dispositif de balayage galvanométrique (402) comprenant un axe de pivotement perpendiculaire au trajet de transport de manière à dévier le faisceau laser cw (116) dans une direction x parallèle au trajet de transport ;
en un balayage unique, le dispositif de balayage polygonal 2D (106) étant commandé de telle sorte que, tandis que le faisceau laser cw (116) est d'abord dévié par le dispositif de balayage polygonal (400) dans la direction y pour traverser le trajet de transport, le dispositif de balayage galvanométrique (402) dévie davantage le faisceau laser cw (116) dans la direction x de manière à compenser la vitesse de transport, de telle sorte que le faisceau laser cw (116) est balayé le long d'une surface du substrat (110) dans une direction perpendiculaire à une extension longitudinale du substrat (110),
pour réaliser une coupe unique (602) à travers le substrat (110), un ensemble de plusieurs balayages uniques répétés étant effectué.

2. Procédé selon la revendication 1,
le substrat (110) étant transporté et plié le long d'un trajet de transport courbe,
le dispositif de balayage polygonal 2D (106) comprenant une optique (408) mettant en œuvre une torsion de correction z pour un ajustement de la mise au point de telle sorte que le faisceau laser cw (116) reste focalisé sur la surface du substrat courbé (110) tout en étant dévié dans diverses orientations dans la direction x.

3. Procédé selon l'une des revendications 1 et 2,
le substrat (110) étant transporté à l'aide d'une roue souple rotative (114) et le substrat (110) étant irradié par le faisceau laser cw (116) tout en étant courbé autour d'une surface superficielle de la roue souple (114).

4. Procédé selon la revendication 3,
la roue souple (114) comprenant des évidements linéaires (202) s'étendant à la surface superficielle de la roue souple (114) dans une direction parallèle à un axe de rotation de la roue souple (114), et
pendant chacun des balayages uniques, le dispositif de balayage polygonal 2D (106) étant commandé de telle sorte que le faisceau laser cw (116) est balayé le long d'une surface du substrat (110) dans une zone positionnée au-dessus de l'un des évidements (202).

5. Procédé selon l'une des revendications 1 à 4,
dans l'ensemble de plusieurs balayages uniques, les balayages uniques étant décalés dans la direction x les uns par rapport aux autres.

6. Dispositif de coupe (100) pour la coupe à haut débit d'un substrat de type ruban (110) en pièces séparées (118), le dispositif (100) comprenant un transporteur (102) pour transporter le substrat (110) le long du trajet de transport à la vitesse de transport ;
une source laser (104) pour irradier le substrat (110) avec le faisceau laser cw (116) ;
un dispositif de balayage polygonal 2D (106) pour dévier le faisceau laser cw (116) provenant de la source laser (104) ;
un dispositif de commande (108) pour commander le fonctionnement du dispositif de balayage polygonal 2D (106) ; **caractérisé en ce que** le dispositif de balayage polygonal 2D (106) comprend un dispositif de balayage polygonal (400) comprenant un axe de rotation parallèle au trajet de transport de manière à dévier le faisceau laser cw (116) dans la direction y perpendiculaire au trajet de transport, et
un dispositif de balayage galvanométrique (402) comprenant un axe de rotation perpendiculaire à la trajectoire de transport de manière à dévier le faisceau laser cw (116) dans la direction x parallèle à la trajectoire de transport ;
le dispositif de balayage polygonal 2D (106) et le dispositif de commande (108) étant configurés de telle sorte que, en un balayage unique, le dispositif de balayage polygonal 2D (106) est commandé de telle sorte que, tandis que le faisceau laser cw (116) est dévié par le dispositif de balayage polygonal (400) dans la direction y pour traverser le trajet de transport, le dispositif de balayage galvanométrique (402) dévie le faisceau laser cw (116) dans la direction x de manière à compenser la vitesse de transport, de telle sorte que le faisceau laser cw (116) est balayé le long d'une surface du substrat (110) dans une direction perpendiculaire à une extension longitudinale du substrat (110) ; et
pour réaliser une coupe unique (602) à travers le substrat (110), un moyen pour effectuer un ensemble de plusieurs balayages uniques répétés étant prévu.

7. Dispositif (100) selon la revendication 6, comprenant en outre une optique (408) mettant en œuvre une correction z pour un ajustement de la focalisation de telle sorte que le faisceau laser cw (116) reste focalisé sur la surface du substrat courbé (110) tout en étant dévié dans diverses orientations dans la direction x lorsque le substrat (110) est transporté et courbé le long d'un trajet de transport courbe.

8. Dispositif (100) selon l'une des revendications 6 et 7, le transporteur (102) comprenant une roue souple rotative (114), et le dispositif (100) étant configuré de telle sorte que le substrat (110) est irradié par le faisceau laser cw (116) tout en étant courbé autour d'une surface superficielle de la roue souple (114).

9. Dispositif (100) selon la revendication 8,
la roue souple (114) comprenant des évidements linéaires (202) s'étendant sur la surface superficielle de la roue souple (114) dans une direction parallèle à un axe de rotation de la roue souple (114), et
le dispositif (100) étant configuré de telle sorte que, pendant le balayage unique, le dispositif de balayage polygonal 2D (106) est commandé de telle sorte que le faisceau laser cw (116) est balayé le long d'une surface du substrat (110) dans une zone positionnée au-dessus de l'un des évidements (202).

10. Dispositif (100) selon l'une des revendications 6 à 9, le dispositif de commande (108) commandant le dispositif de balayage polygonal 2D (106) de telle sorte que, dans l'ensemble de plusieurs balayages uniques, les balayages uniques sont décalés dans la direction x les uns par rapport aux autres.

11. Dispositif (100) selon l'une des revendications 6 à 10, la source laser (104) ayant une puissance laser cw de plus d'un kilowatt.

12. Dispositif (100) selon l'une des revendications 6 à 11,
le dispositif de balayage polygonal (400) étant configuré de manière à balayer le faisceau laser cw (116) dans la direction y le long de la surface du substrat (110) avec une vitesse de balayage qui est au moins 100 fois la vitesse de transport avec laquelle le substrat (110) est transporté le long du trajet de transport.
